# EUROPÄISCHE PATENTSCHRIFT

(11) **EP 3 649 093 B1**
(45) Veröffentlichungstag und Bekanntmachung des Hinweises auf die Patenterteilung: **07.04.2021**
(21) Anmeldenummer: 18739497.8
(22) Anmeldetag: 05.07.2018
(51) Int. Cl.: C04B 35/628, F16J 15/34

(54) **GLEITELEMENT MIT EINEM GRAPHENHALTIGEN MATERIAL UMMANTELTEN PARTIKULÄREN TRÄGERMATERIAL SOWIE GLEITRINGDICHTUNG UND LAGERANORDNUNG**
SLIDE ELEMENT COMPRISING A PARTICULATE CARRIER MATERIAL, WHICH IS SHEATHED IN A GRAPHENE-CONTAINING MATERIAL, SLIP RING SEAL AND BEARING ARRANGEMENT
ÉLÉMENT DE GLISSEMENT COMPRENANT UN SUPPORT PARTICULAIRE, ENROBÉ D'UN MATÉRIAU CONTENANT DU GRAPHÈNE, AINSI QU'UNE GARNITURE MÉCANIQUE D'ÉTANCHÉITÉ ET ENSEMBLE PALIER

(30) Priorität: 07.07.2017 DE 102017211660
(43) Veröffentlichungstag der Anmeldung: 13.05.2020
(73) Patentinhaber: EagleBurgmann Germany GmbH & Co. KG, 82515 Wolfratshausen (DE)
(72) Erfinder: MÜLHAUPT, Rolf, 79117 Freiburg (DE); THELKE, Jörg, 82515 Wolfratshausen (DE); ZHANG, Wenli, 01309 Dresden (DE)
(74) Vertreter: Hoefer & Partner Patentanwälte mbB
(86) Internationale Anmeldenummer: PCT/EP2018/068191
(87) Internationale Veröffentlichungsnummer: WO 2019/008079

(56) Entgegenhaltungen:
- EP-A1- 3 119 732
- CN-A- 106 128 562
- CN-A- 106 388 349
- CN-A- 106 761 100

## Beschreibung

Die Erfindung betrifft ein Gleitelement mit sehr guter Stabilität und geringem Abrieb sowie eine Gleitringdichtung und eine Lageranordnung mit diesem Gleitelement.

Aus dem Stand der Technik, z.B. der DE 10 2014 205 291 A oder EP3119732 A1, ist eine Gleitringdichtung bekannt, die als Basismaterial SiC enthält, das mit Graphen als Füllstoff versetzt ist. Die Gleitringdichtung zeichnet sich durch eine gute Risszähigkeit und Biegefestigkeit aus. Nachteilig hieran sind die vergleichsweise geringe Härte und das niedrige Elastizitätsmodul. Hierdurch ist die Abriebfestigkeit reduziert und die Gleitringdichtung eignet sich weniger für den Einsatz in mechanisch und/oder thermisch belasteten Systemen.

Es ist daher Aufgabe der Erfindung, ein Gleitelement, eine Gleitringdichtung und eine Lageranordnung bereitzustellen, die sich durch eine verbesserte Abriebfestigkeit und Härte und damit durch eine erhöhte Stabilität selbst unter hohen mechanischen und/oder thermischen Belastungen auszeichnen. Ferner ist es eine Aufgabe der Erfindung, ein Verfahren zur Herstellung eines mit einem graphenhaltigen Material ummantelten partikulären Trägermaterials sowie ein Verfahren zur Herstellung eines Gleitelements anzugeben, die sich durch eine einfache Umsetzbarkeit auszeichnen, wobei im erstgenannten Verfahren das mit einem graphenhaltigen Material ummantelte partikuläre Trägermaterial in hoher Ausbeute anfällt.

Aus der CN 106760100 A und der CN 106388349 A sind Gleitschienen bekannt, welche aus einem Gemisch von Graphen mit weiteren Bestandteilen beschichtet sind.

Die Lösung dieser Aufgabe erfolgt durch ein Gleitelement gemäß Anspruch 1. Das erfindungsgemäße Gleitelement umfasst eine erste Gleitfläche, die in gleitenden Kontakt mit einem weiteren Bauteil stehen oder gelangen kann.

Die erste Gleitfläche umfasst hierbei ein partikuläres Trägermaterial und ein graphenhaltiges Material.

Unter einem partikulären Trägermaterial wird erfindungsgemäß ein Material verstanden, das als Substrat, also als Basismaterial, für das Aufbringen von graphenhaltigem Material dient. Das partikuläre Trägermaterial liegt in Form von Partikeln vor, die mindestens teilweise, und insbesondere vollständig, von dem graphenhaltigen Material ummantelt sind.

Unter einem graphenhaltigen Material wird im Sinne der vorliegenden Erfindung ein Material verstanden, das mindestens teilweise aus Graphen besteht. Vorzugsweise besteht das gesamte graphenhaltige Material bis auf technisch unvermeidbare Rückstände aus Graphen.

Zwischen dem partikulären Trägermaterial und dem graphenhaltigen Material ist eine stoffschlüssige Verbindung vorhanden. Dies bedeutet, dass zwischen dem partikulären Trägermaterial und dem graphenhaltigen Material eine Verbindung besteht, bei der das graphenhaltige Material direkt auf der Oberfläche des partikulären Trägermaterials haftet. Die stoffschlüssige Verbindung kann dabei insbesondere durch physikalische und/oder chemische Wechselwirkungen zwischen dem partikulären Trägermaterial und dem graphenhaltigen Material geprägt sein. Auch können Zwischenverbindungen zwischen Graphen und dem partikulären Trägermaterial in die Verbindungsbildung mit eingehen. Durch die stoffschlüssige Verbindung wird eine dauerhaft gute, abriebfeste Beschichtung mit graphenhaltigem Material auf der Oberfläche des partikulären Trägermaterials erhalten.

Hierdurch zeichnet sich das Gleitelement selbst bei hoher mechanischer Belastung und hohen Temperaturen durch eine hohe Härte und ein hohes Elastizitätsmodul aus, wodurch eine hohe Abriebfestigkeit des Gleitelements bei gleichzeitig guten Gleiteigenschaften erhalten wird.

Weiter umfasst das Gleitelement einen ersten Basiskörper. Der Basiskörper ist als Grundkörper anzusehen, an bzw. auf dem eine entsprechende Gleitfläche angeordnet oder ausgebildet ist. Zur Verbesserung einer Bindung zwischen dem Basiskörper und der Gleitfläche weist der erste Basiskörper ausschließlich das partikuläre Trägermaterial auf. Dies bedeutet mit anderen Worten, dass der erste Basiskörper aus demselben partikulären Trägermaterial gebildet ist wie das mit graphenhaltigem Material ummantelte partikuläre Trägermaterial, das jedoch, im Gegensatz zu dem in der ersten Gleitfläche enthaltenen partikulären Trägermaterial nicht von graphenhaltigem Material ummantelt ist.

Die Unteransprüche haben vorteilhafte Ausgestaltungen und Weiterbildungen der Erfindung zum Inhalt.

Gemäß einer vorteilhaften Weiterbildung ist das partikuläre Trägermaterial vollständig von dem graphenhaltigen Material ummantelt. Dies bedeutet, dass die Partikeloberfläche des partikulären Trägermaterials allseitig von dem graphenhaltigen Material ummantelt ist. Hierdurch kann die Abriebfestigkeit des Gleitelements bei Maximierung des Elastizitätsmoduls verbessert werden.

Aus Gründen der verbesserten Gleiteigenschaften bei guter Stabilität ist vorzugsweise die gesamte erste Gleitfläche aus dem mit dem graphenhaltigem Material ummantelten Trägermaterial bzw. ist weiter vorteilhaft das gesamte Gleitelement aus mit graphenhaltigem Material ummantelten Trägermaterial gebildet. Hierdurch kann auch eine Rissbildung im graphenhaltigen Material reduziert oder sogar vermieden werden.

Aus Gründen der Kostenreduktion bei guter Härte der Gleitfläche und/oder des Gleitelements, ist vorteilhaft vorgesehen, dass die erste Gleitfläche aus einem Gemisch an partikulärem Trägermaterial und mit graphenhaltigem Material ummanteltem partikulärem Trägermaterial besteht.

Weiter vorteilhaft beträgt ein Masseverhältnis an partikulärem Trägermaterial und mit graphenhaltigem Material ummanteltem partikulärem Trägermaterial 80:20 bis 99,5:0,5 und insbesondere 90:10 bis 99,5:0,5. Bei geringem Materialeinsatz für Graphen kann somit eine erste Gleitfläche mit sehr guter Abriebfestigkeit erhalten werden. Das Gleitelement kann somit kostengünstig hergestellt werden.

Zur weiteren Verbesserung der Abriebfestigkeit der ersten Gleitfläche durch Erhöhung der Härte, ist das partikuläre Trägermaterial vorzugsweise ein keramisches Material. Keramische Materialien, also gebrannte Keramiken haben sich selbst unter harschen Bedingungen, wie z.B. einer hohen mechanischen und/oder thermischen Belastung, als besonders abriebfest herausgestellt. Vorteilhaft ist das keramische Material ausgewählt aus der Gruppe bestehend aus: SiC, WC, B₄C, BN, Si₃N₄, Al₂O₃, MgO, ZrO₂ und beliebigen Gemischen daraus, wobei SiC aus Kostengründen besonders bevorzugt ist.

Im Hinblick auf eine weitere Verbesserung der Abriebfestigkeit der ersten Gleitfläche des Gleitelements ist ferner vorteilhaft vorgesehen, dass die graphenhaltige Ummantelung eine Lage bis 100 Lagen, insbesondere eine Lage bis 20 Lagen und insbesondere eine Lage bis zwölf Lagen an graphenhaltigem Material umfasst. Durch den Lagenaufbau können zudem die tribologischen Eigenschaften des Gleitelements optimiert werden.

Eine deutliche Reduzierung des potentiellen Verschleißvolumens der ersten Gleitfläche lässt sich durch die vorteilhafte Weiterbildung erzielen, in der die erste Gleitfläche 6 bis 8 Vol% Makroporen, bezogen auf das Gesamtvolumen der ersten Gleitfläche, enthält. Unter Makroporen werden hierbei im Sinne der vorliegenden Erfindung Poren mit einem Porendurchmesser von 10 bis 50 µm verstanden. Der Porendurchmesser wird hierbei durch ein LSM-Verfahren (Laser-Scanning-Microscopy) bestimmt. Vorzugsweise ist die erste Gleitfläche frei von Mikroporen mit einem Porendurchmesser von 1 bis 10 µm. Porenfrei bedeutet hierbei, dass zwischen dem mit graphenhaltigem Material ummantelten partikulären Trägermaterial und etwaigem vorliegenden nicht ummantelten partikulären Trägermaterial keine Mikroporen vorhanden sind. Die Dichte der ersten Gleitfläche ist somit optimal, wodurch auch die Abriebbeständigkeit bei guten Gleiteigenschaften erhöht werden kann.

Ferner erfindungsgemäß wird auch eine Gleitringdichtung beschrieben. Die erfindungsgemäße Gleitringdichtung umfasst einen rotierenden ersten Gleitring mit einer ersten Gleitfläche und einen stationären zweiten Gleitring mit einer zweiten Gleitfläche, welche zwischen sich einen Dichtspalt definieren. In der erfindungsgemäßen Gleitringdichtung ist der erste Gleitring oder der zweite Gleitring oder sind insbesondere beide Gleitringe in Form des wie vorstehend beschriebenen erfindungsgemäßen Gleitelements ausgebildet. Durch Ausbildung eines oder sogar beider Gleitringe der Gleitringdichtung in Form des erfindungsgemäßen Gleitelements, kann auch in der erfindungsgemäßen Gleitringdichtung selbst bei hoher mechanischer Belastung und hohen Temperaturen eine hohe Härte und ein hohes Elastizitätsmodul erzielt werden, wodurch eine hohe Abriebfestigkeit des ersten und/oder zweiten Gleitrings bei gleichzeitig guten Gleiteigenschaften erhalten werden kann.

Darüber hinaus erfindungsgemäß wird auch eine Lageranordnung beschrieben, die mindestens ein wie vorstehend offenbartes Gleitelement umfasst. Die Lageranordnung kann beispielsweise in Form eines Gleitlagers oder eines Wälzlagers ausgebildet sein. Besonders bevorzugt ist die Ausführung in Form eines Gleitlagers, das insbesondere ein Radialgleitlager oder ein Axialgleitlager ist. Eines oder beide Gleitelemente bzw. eine oder beide Gleitflächen des Gleitlagers sind bevorzugt entsprechend einem erfindungsgemäßen Gleitelement ausgebildet. Derartige Lageranordnungen werden bevorzugt bei Pumpen oder Magnetkupplungen verwendet.

Die Lageranordnung umfasst bevorzugt zumindest einen äußeren Laufring und einen inneren Laufring, wobei das Wälzlager zudem noch Wälzkörper umfasst. Erfindungsgemäß ist nun der äußere Laufring oder der innere Laufring oder sind beide Laufringe in Form des vorstehend offenbarten erfindungsgemäßen Gleitelements ausgebildet. Sofern die Lageranordnung ein Wälzlager ist, können alternativ oder auch additiv dazu ein oder mehrere Wälzkörper in Form des erfindungsgemäßen Gleitelements ausgebildet sein. Hierdurch kann bei Bereitstellung von sehr guten Gleiteigenschaften selbst bei hohen Temperaturen und hoher mechanischer Belastung eine sehr gute Abriebfestigkeit der Lageranordnung erzielt werden.

Ebenfalls wird auch ein Verfahren zur Herstellung eines mit einem graphenhaltigen Material ummantelten partikulären Trägermaterials beschrieben. Das hergestellte Trägermaterial kann aufgrund seiner sehr guten mechanischen Eigenschaften insbesondere zur Verbesserung der Abriebfestigkeit eines Gleitelements, wie beispielsweise einer Gleitfläche eines Gleitrings oder einer Lageranordnung, verwendet werden.

Das Verfahren umfasst zunächst einen Schritt des Dispergierens eines partikulären Trägermaterials in einem Dispergiermittel. Sowohl das partikuläre Trägermaterial als auch das Dispergiermittel sind im Einzelnen nicht beschränkt. Das partikuläre Trägermaterial kann insbesondere wie vorstehend für die erfindungsgemäße Gleitelement ausgebildet sein und hierzu vorteilhaft mindestens ein keramisches Material und insbesondere SiC, umfassen. Als Dispergiermittel wird ein Medium gewählt, in dem das partikuläre Trägermaterial gut verteilbar ist. Aus Kostengründen und Gründen des Umweltschutzes sind wasserhaltige und/oder alkoholhaltige, und hierunter insbesondere ethanolhaltige Dispergiermittel, bevorzugt. Das Dispergieren kann z.B. unter Anwendung von Ultraschall und/oder unter Verwendung eines Rührers und/oder eines Homogenisators ausgeführt werden. Wesentlich hierbei ist eine gute Verteilung der Partikel des partikulären Trägermaterials in dem Dispergiermittel.

In einem weiteren Schritt erfolgt das Zugeben einer Kohlenstoffquelle, insbesondere einer kohlenstoffhaltigen Verbindung. Diese Verbindung ist hierbei geeignet, unter entsprechender Weiterverarbeitung graphenhaltiges Material zu bilden. Die Kohlenstoffquelle ist mit anderen Worten ein Graphen-Precursor.

Im Anschluss daran wird das Dispergiermittel unter Erhalt einer Festsubstanz entfernt. Hierbei können übliche Verfahrensschritte angewendet werden, wie beispielsweise ein Entfernen des Dispergiermittels durch Temperaturanwendung, durch Verdampfen des Dispergiermittels in einem Rotationsverdampfer oder durch Gefriertrocknung. Es verbleibt eine Festsubstanz aus Kohlenstoffquelle für das zu bildende graphenhaltige Material und partikulärem Trägermaterial, wobei die Kohlenstoffquelle auf einer Oberfläche des partikulären Trägermaterials angeordnet ist.

Hieran schließt sich ein Schritt des Carbonisierens der chemischen Verbindung an. Das Carbonisieren wird unter Temperaturbehandlung ausgeführt, und zwar derart, dass graphenhaltiges Material das partikuläre Trägermaterial mindestens teilweise, insbesondere vollständig, ummantelt. Die hierzu erforderliche thermische Behandlung kann insbesondere in einem Rohrofen ausgeführt werden, dessen Temperatur gut steuerbar ist.

Durch das direkte Carbonisieren von auf einer Oberfläche des partikulären Trägermaterials angeordnetem Graphen-Precursor wird eine stoffschlüssige Verbindung zwischen dem Trägermaterial und dem erzeugten Graphen gebildet. Damit ist die graphenhaltige Ummantelung dauerhaft fest und stabil mit dem partikulären Trägermaterial verbunden, wodurch eine hohe Abriebfestigkeit erzeugt wird. Das Verfahren ist einfach ausführbar und ermöglicht die Herstellung von mit graphenhaltigem Material ummanteltem partikulärem Trägermaterial mit hoher Ausbeute.

Aus Gründen des Umweltschutzes und auch deshalb, weil diese Kohlenstoffquelle aus nachwachsenden Rohstoffen abstammt, ist die Kohlenstoffquelle vorteilhafterweise ausgewählt aus der Gruppe bestehend aus: Furfurylalkohol, Glucose und beliebigen Mischungen daraus. Diese Verbindungen bilden zudem sehr leicht unter thermischer Behandlung Graphen mit hoher Ausbeute.

Zur Erhöhung der Ausbeute an mit graphenhaltigem Material ummanteltem partikulärem Trägermaterial wird vorzugsweise die nach dem Entfernen des Dispergiermittels erhaltene Festsubstanz vor dem Carbonisieren zerkleinert. Die Festsubstanz hat nach dem Zerkleinern insbesondere einen Partikeldurchmesser von weniger als 1 mm und insbesondere von weniger als 0,1 mm. Somit kann auch eine Temperaturbehandlung unter Bildung einer graphenhaltigen Mantelschicht besonders gleichförmig ausgeführt werden.

Als besonders vorteilhaft für die Bildung einer graphenhaltigen Ummantelung eines partikulären Trägermaterials hat sich ein mindestens zweitstufiger Temperaturprozess herausgestellt. Das Carbonisieren wird hierzu insbesondere in einem zweistufigen Temperaturprozess unter Inertgasatmosphäre ausgeführt, wobei in einem ersten Temperaturschritt die Festsubstanz mit einer Heizrate von 5 °C/min auf 80 bis 180 °C aufgeheizt und für 15 bis 25 Stunden auf diesem Temperaturbereich gehalten wird und wobei in einem zweiten Temperaturschritt die Festsubstanz mit einer Heizrate von 5 °C/min auf 600 bis 1500 °C aufgeheizt und für 4 bis 8 Stunden auf diesem Temperaturbereich gehalten wird. Hierdurch wird es möglich, den Graphen-Precursor nahezu vollständig in Graphen umzuwandeln, so dass die das partikuläre Trägermaterial umgebende Mantelschicht weitestgehend, also bis auf technisch unvermeidbare Rückstände, aus Graphen besteht.

Nachfolgend werden vorteilhafte Weiterbildungen zur Herstellung von mit graphenhaltigem Material ummanteltem partikulärem Trägermaterial offenbart.

Für die Herstellung von mit Graphen beschichtetem SiC unter Verwendung von Furfurylalkohol (FA) (SiC : Furfurylalkohol 90 : 10 Gew.-%) wird SiC (152,55 g) in Wasser (200 mL) dispergiert. Anschließend erfolgt die Zugabe von Furfurylalkohol (15 mL). Nach 10 min Rühren wird als Initiator p-TsOH (0.33 g) in Wasser (10 mL) gelöst und zum SiC/FA-Gemisch zugegeben. Nach weiten 20 min Rühren wird das Reaktionsgemisch auf 80 °C erhitzt. Nach 1 h wird die Mischung bei 100 °C für weitere 6 h gehalten, bis das Wasser verdampft ist. Das getrocknete Pulver wird nach Zerkleinern in einem Rohrofen bei inerter Atmosphäre (N₂) carbonisiert (thermolysiert). Dazu wird in Schritten von 5 °C/min auf 150 °C erhitzt, für 21 h gehalten und anschließend in Schritten von 5 °C/min auf 800 °C erhöht und für 6 h thermolysiert. Hier wird das funktionalisierte Graphen mit Furfurylalkohol als Kohlenstoffquelle über eine Templat vermittelte Reaktion hergestellt. SiC dient hier als Templat. Dabei wird auch ein homogenes Gemisch aus Graphen und SiC erhalten. Durch die Beschichtung mit Graphen verändern sich die spezifische Oberfläche (von 10 auf 39 m²/g), die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, sowie die Farbe des SiC stark.

Die Morphologie der SiC-Partikel und des mit graphenhaltigem Material ummantelten SiC kann mittels TEM analysiert werden. Es werden dünne Graphenlagen erhalten. Die SiC-Partikel sind mit ca. acht Graphenlagen beschichtet. Der Graphengehalt des erhaltenen Produkts beträgt 4,4 Gew.-%.

Alternativ wird für die Herstellung von mit Graphen beschichtetem SiC unter Verwendung von Furfurylalkohol (SiC : Furfurylalkohol = 80 : 20 Gew.-%) SiC (90,40 g) in Ethanol (200 mL) dispergiert. Anschließend erfolgt die Zugabe von Furfurylalkohol (20 mL). Nach 10 min Rühren wird der Initiator p-TsOH (0,44 g) in Ethanol (10 mL) gelöst und zum SiC/FA-Gemisch zugegeben. Nach weiten 20 min Rühren wird das Reaktionsgemisch auf 70 °C erhitzt. Nach 3 h wird die Mischung bei 100 °C für weitere 2 h gehalten. Das restliche Ethanol wird mittels Rotationsverdampfer entfernt. Das getrocknete Pulver wird nach Zerkleinern in einem Rohrofen bei inerter Atmosphäre (N₂) carbonisiert. Dazu wird in Schritten von 5 °C/min auf 150 °C erhitzt, für 21 h gehalten und anschließend in Schritten von 5 °C/min auf 800 °C erhöht und für 6 h thermolysiert. Das erhaltene Produkt besitzt einen Graphengehalt von 7,6 Gew.-% und eine spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 53 m²/g.

Alternativ wird für die Herstellung von mit Graphen beschichtetem SiC unter Verwendung von Furfurylalkohol (SiC : Furfurylalkohol = 70 : 30 Gew.-%) SiC (105,47 g) in Ethanol (200 mL) dispergiert. Anschließend erfolgt die Zugabe von Furfurylalkohol (40 mL). Nach 10 min Rühren wird der Initiator p-TsOH (0,88 g) in Ethanol (10 mL) gelöst und zum SiC/FA-Gemisch zugegeben. Nach weiten 20 min Rühren wird das Reaktionsgemisch auf 70 °C erhitzt. Nach 4 h wird die Mischung bei 100 °C für weitere 2 h gehalten. Das restliche Ethanol wird mittels Rotationsverdampfer entfernt. Das getrocknete Pulver wird nach Zerkleinern in einem Rohrofen bei inerter Atmosphäre (N₂) carbonisiert. Dazu wird in Schritten von 5 °C/min auf 150 °C erhitzt, für 21 h gehalten und anschließend in Schritten von 5 °C/min auf 800 °C erhöht und für 6 h thermolysiert. Das erhaltene Produkt besitzt einen Graphengehalt von 14,3 Gew.-% und eine spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 100 m²/g.

Für die Herstellung von Graphen beschichtetem SiC unter Verwendung von Glucose (SiC : Glucose = 90 : 10 Gew.-%) wird SiC (20 g) in Wasser (90 mL) mittels Ultraschallbad (2 * 15 min) dispergiert. Anschließend erfolgt die Zugabe einer Lösung von Glucose (2.00 g) in Wasser (10 mL). Nach Vordispergierung mittels Ultraschallbad (2 * 15 min) wird das Reaktionsgemisch mittels Uttraschalllanze (2 - 8 min, 40 % Amplitude) unter Eiskühlung vollständig dispergiert. Danach wird das Wasser durch Gefriertrocknung entfernt. Das getrocknete Pulver wird nach Zerkleinern in einem Rohrofen bei inerter Atmosphäre (N₂) carbonisiert. Dazu wird in Schritten von 5 °C/min auf 150 °C erhitzt, für 21 h gehalten und anschließend in Schritten von 5 °C/min auf 800 °C erhöht und für 6 h thermolysiert. Statt Furfurylalkohol wird hier das funktionalisierte Graphen mit Glucose als Kohlenstoffquelle über eine Templat vermittelte Reaktion hergestellt. SiC dient hier als Templat. Dabei wird auch ein homogenes Gemisch aus Graphen und SiC erhalten. Durch die Beschichtung mit Graphen verändern sich die spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, (von 10 auf 20 m²/g) sowie die Farbe der SiC stark.

Die Morphologie des erhaltenen Produktes kann mittels TEM analysiert werden. Alle SiC-Partikel weisen ca. sieben bis 20 Graphenlagen auf. Der Graphengehalt des Produktes beträgt 2,0 Gew.-%.

Alternativ wird für die Herstellung von Graphen beschichtetem SiC unter Verwendung von Glucose (SiC : Glucose = 80 : 20 Gew.-%) SiC (30 g) in Wasser (70 mL) mittels Ultraschallbad (2 * 15 min) dispergiert. Anschießend erfolgt die Zugabe einer Lösung von Glucose (7,50 g) in Wasser (30 mL). Nach Vordispergierung mittels Ultraschallbad (2 * 15 min) wird das Reaktionsgemisch mittels Ultraschalllanze (2 * 8 min, 40 % Amplitude) unter Eiskühlung vollständig dispergiert. Danach wird das Wasser durch Gefriertrocknung entfernt. Das getrocknete Pulver wird nach Zerkleinern in einem Rohrofen bei inerter Atmosphäre (N₂) carbonisiert. Dazu wird in Schritten von 5 °C/min auf 150 °C erhitzt, für 21 h gehalten und anschließend in Schritten von 5 °,C/min auf 800 °C erhöht und für 6 h thermolysiert.

Das Produkt besitzt einen Graphengehalt von 5,2 Gew.-% und eine spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 39 m²/g.

Alternativ wird für die Herstellung von Graphen beschichtetem SiC mit Glucose (SiC : Glucose = 70 : 30 Gew.-%) SiC (30 g) in Wasser (70 mL) mittels Ultraschallbad (2 * 15 min) dispergiert. Anschließend erfolgt die Zugabe einer Lösung von Glucose (12,86 g) in Wasser (30 mL). Nach Vordispergierung mittels Ultraschallbad (2 * 15 min) wird das Reaktionsgemisch mittels Ultraschalllanze (2 * 8 min, 40 % Amplitude) unter Eiskühlung vollständig dispergiert. Danach wird das Wasser durch Gefriertrocknung entfernt. Das getrocknete Pulver wird nach Zerkleinern in einem Rohrofen bei inerter Atmosphäre (N₂) carbonisiert. Dazu wird in Schritten von 5 °C/min auf 150 °C erhitzt, für 21 h gehalten und anschließend in Schritten von 5 °C/min auf 800 °C erhöht und für 6 h thermolysiert.

Das Produkt besitzt einen Graphengehalt von 8,8 Gew.-% und eine spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 57 m²/g.

Alternativ wird für die Herstellung von Graphen beschichtetem SiC unter Verwendung von Glucose (SiC : Glucose = 60 : 40 Gew.-%) SiC (30 g) in Wasser (70 mL) mittels Ultraschallbad (2 *15 min) dispergiert. Anschließend erfolgt die Zugabe einer Lösung von Glucose (20,00 g) in Wasser (30 mL). Nach Vordispergierung mittels Ultraschallbad (2 * 15 min) wird das Reaktionsgemisch mittels Ultraschalllanze (2 * 8 min, 40 % Amplitude) unter Eiskühlung vollständig dispergiert. Danach wird das Wasser durch Gefriertrocknung entfernt. Das getrocknete Pulver wird nach Zerkleinern in einem Rohrofen bei inerter Atmosphäre (N₂) carbonisiert Dazu wird in Schritten von 5°C/min auf 150 "C erhitzt für 21 h gehalten und anschließend in Schritten von 5 °C/min auf 800 °C erhöht und für 6 h thermolysiert.

Das Produkt besitzt einen Graphengehalt von 13,4 Gew. -% und eine spezifische Oberfläche, die durch N₂-Adsorption mittels eines BET-Verfahrens unter Verwendung eines Sorptomatic 1990 (Protec Hofheim) unter Bestimmung der massenbezogenen spezifischen Oberfläche einer Probe durch Detektion der Menge an adsorbiertem Stickstoff an die Probenoberfläche, gemessen wird, von 76 m²/g.

Ferner wird auch ein Verfahren zur Herstellung eines Gleitelements beschrieben. Das Verfahren ist damit auch anwendbar zur Herstellung einer Lageranordnung und eines Gleitrings, wie er in der vorstehend beschriebenen Gleitringdichtung verwendet wird. Es wird daher auch hinsichtlich der Vorteile, vorteilhaften Effekte und Weiterbildungen, ergänzend Bezug genommen auf die Ausführungen zu dem erfindungsgemäßen Gleitelement.

In dem Verfahren wird ein Gleitelement hergestellt, das eine Gleitfläche umfasst, die spezifisch ausgebildet wird. Hierzu wird in einem Schritt eine Mischung hergestellt, die ein partikuläres Trägermaterial und ein mindestens teilweise, insbesondere vollständig, mit einem graphenhaltigen Material ummanteltes partikuläres Trägermaterial umfasst. Das mit dem graphenhaltigen Material ummantelte partikuläre Trägermaterial ist z.B. durch das vorstehend beschriebene Verfahren zur Herstellung eines mit einem graphenhaltigen Material ummantelten partikulären Trägermaterials erhältlich. Das Mischen kann auf herkömmliche Weise, beispielsweise unter Verwendung eines Rührers und/oder eines Homogenisators und/oder durch Anwendung von Ultraschall, ausgeführt werden.

Die Mischung kann an sich als Gleitelement ausgebildet werden, sie kann aber auch beispielsweise auf einen Basiskörper aufgebracht werden, der insbesondere aus dem partikulären Trägermaterial besteht, und bildet dann lediglich eine Gleitfläche des Gleitelements.

In einem weiteren Schritt schließt sich ein Sintern der Mischung an. Hierdurch wird eine stoffschlüssige Verbindung, eine Sinterverbindung zwischen dem partikulären Trägermaterial und dem mit graphenhaltigem Material ummanteltem Trägermaterial, ausgebildet. Durch das Sintern wird insbesondere eine porenfreie Gleitfläche erzeugt. Ein durch das erfindungsgemäße Verfahren hergestelltes Gleitelement zeichnet sich bei einfacher und damit auch kostengünstiger Herstellung durch eine hohe Stabilität und Abriebfestigkeit, selbst bei starker mechanischer und/oder thermischer Belastung aus.

Aus Gründen der Verbesserung der Härte der Gleitfläche wird das partikuläre Trägermaterial vorteilhafterweise aus einem keramischen Material, insbesondere aus der Gruppe bestehend aus: SiC, WC, B₄C, BN, Si₃N₄, Al₂O₃, MgO, ZrO₂ und beliebigen Gemischen daraus ausgewählt, und besteht insbesondere aus SiC.

Zur weiteren Einsparung der Kosten bei Erhalt einer hohen Stabilität im Gleitelement, wird die Mischung auf einen Basiskörper aufgebracht, wobei der Basiskörper insbesondere aus einem keramischen Material, insbesondere ausgewählt aus der Gruppe bestehend aus: SiC, WC, B₄C, BN, Si₃N₄, Al₂O₃, MgO, ZrO₂ und beliebigen Gemischen daraus, und insbesondere aus SiC, besteht.

Nachfolgend werden bevorzugte Ausführungsbeispiele der Erfindung unter Bezugnahme auf die begleitende Zeichnung im Detail beschrieben. Gleiche bzw. funktional gleiche Teile sind in der Zeichnung dabei jeweils mit den gleichen Bezugszeichen bezeichnet. In der Zeichnung ist:
- Fig. 1: eine schematische Schnittansicht einer Gleitringdichtung gemäß einem ersten Ausführungsbeispiel der Erfindung;
- Fig. 2: eine schematische Schnittansicht des in Fig. 1 gezeigten zweiten Gleitrings;
- Fig. 3: eine schematische Längsschnittansicht einer Lageranordnung gemäß einem zweiten Ausführungsbeispiel der Erfindung;
- Fig. 4: ein Querschnitt der in Fig. 3 gezeigten Lageranordnung;
- Fig. 5: eine schematische Schnittansicht eines mit graphenhaltigem Material ummantelten partikulären Trägermaterials des in Figur 2 gezeigten stationären Gleitrings;
- Fig. 6: eine schematische Darstellung eines Verfahrens zur Herstellung von mit graphenhaltigem Material ummanteltem partikulärem Trägermaterial gemäß einer Ausführungsform;
- Fig. 7: eine schematische Darstellung eines Verfahrens zur Herstellung eines Gleitelements gemäß einer Ausführungsform.

Die vorliegende Erfindung wird anhand von Ausführungsbeispielen im Detail beschrieben. In den Figuren sind nur die wesentlichen Merkmale der vorliegenden Erfindung dargestellt, alle übrigen Merkmale sind der Übersichtlichkeit halber weggelassen. Ferner beziffern gleiche Bezugszeichen gleiche Elemente.

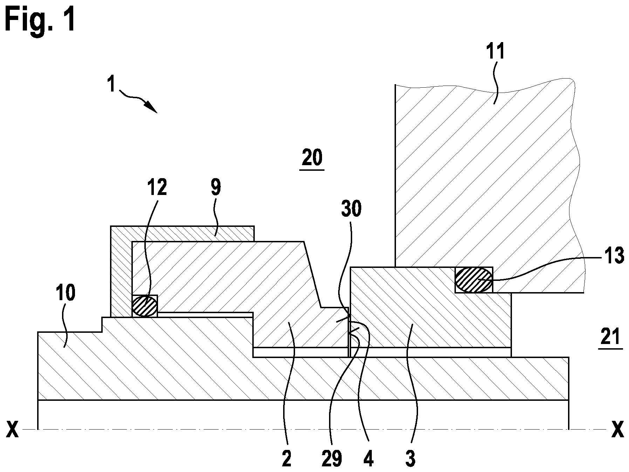

Fig. 1 zeigt schematisch eine Gleitringdichtungsanordnung 1 mit einem rotierenden Gleitring 2 mit einer ersten Gleitfläche 29 und einem stationären Gleitring 3 mit einer zweiten Gleitfläche 30. Zwischen den beiden Gleitringen 2, 3 ist in bekannter Weise ein Dichtspalt 4 definiert. Der rotierende Gleitring 2 ist über ein Mitnahmeelement 9 mit einem rotierenden Bauteil 10, beispielsweise einer Wellenhülse oder dgl., verbunden. Die Bezugszeichen 12 und 13 bezeichnen O-Ringe. Der stationäre Gleitring 3 ist mit einem stationären Bauteil 11, wie z.B. einem Gehäuse o. dgl., verbunden.

Die Gleitringdichtungsanordnung 1 dichtet dabei einen Produktbereich 20 von einem Atmosphärenbereich 21 ab.

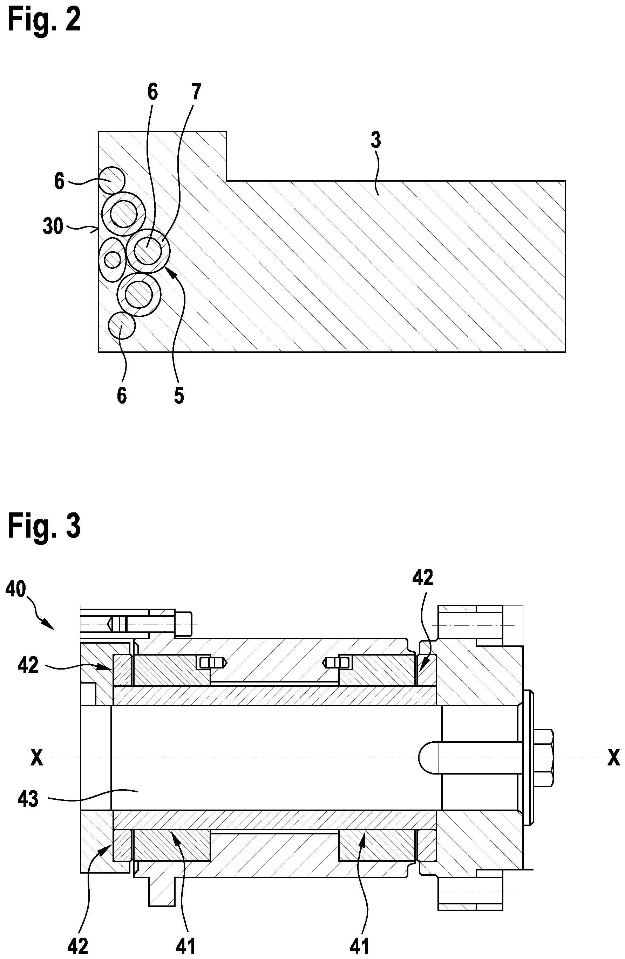

Der stationäre Gleitring 3 ist als Gleitelement im Sinne der vorliegenden Erfindung anzusehen und ist im Detail in Fig. 2 gezeigt. Der stationäre Gleitring 3 weist die zweite Gleitfläche 30 auf. Die zweite Gleitfläche 30 ist aus einem gesinterten Material gebildet, das ein partikuläres Trägermaterial 6 und ein graphenhaltiges Material 7 umfasst. Das partikuläre Trägermaterial 6 ist mindestens teilweise von dem graphenhaltigen Material 7 ummantelt, so dass das graphenhaltige Material 7 eine Oberfläche des partikulären Trägermaterials 6 mindestens abschnittsweise umgibt. In Figur 2 ist beispielhaft dargestellt, dass das graphenhaltige Material 7 das partikuläre Trägermaterial 6 vollständig umgibt. Dies ist aber nicht zwingend erforderlich.

Wie in Figur 2 ferner erkennbar ist, umfasst die zweite Gleitfläche 30 nicht nur ein mit graphenhaltigem Material ummanteltes Trägermaterial 5, sondern auch partikuläres Trägermaterial 6, das nicht mit graphenhaltigem Material ummantelt ist. Mit anderen Worten umfasst die zweite Gleitfläche 30 ein Gemisch an partikulärem Trägermaterial 6 und mit graphenhaltigem Material ummanteltem partikulärem Trägermaterial 5.

Hierbei beträgt ein Masseverhältnis an partikulärem Trägermaterial 6 und mit graphenhaltigem Material ummanteltem partikulärem Trägermaterial 5 vorteilhafterweise 80:20 bis 99,5:0,5 und insbesondere 90:10 bis 99,5:0,5.

Das partikuläre Trägermaterial 6 besteht in der dargestellten Ausführungsform aus einem keramischen Material, das insbesondere aus der Gruppe bestehend aus: SiC, WC, B₄C, BN, Si₃N₄, Al₂O₃, MgO, ZrO₂ und beliebigen Gemischen daraus ausgewählt ist. SiC ist aufgrund der guten Verarbeitbarkeit, seinen sehr guten mechanischen Eigenschaften und darüber hinaus aufgrund seines moderaten Preises besonders bevorzugt. Das partikuläre Trägermaterial 6 liegt dann in Form von keramischen Körnern vor.

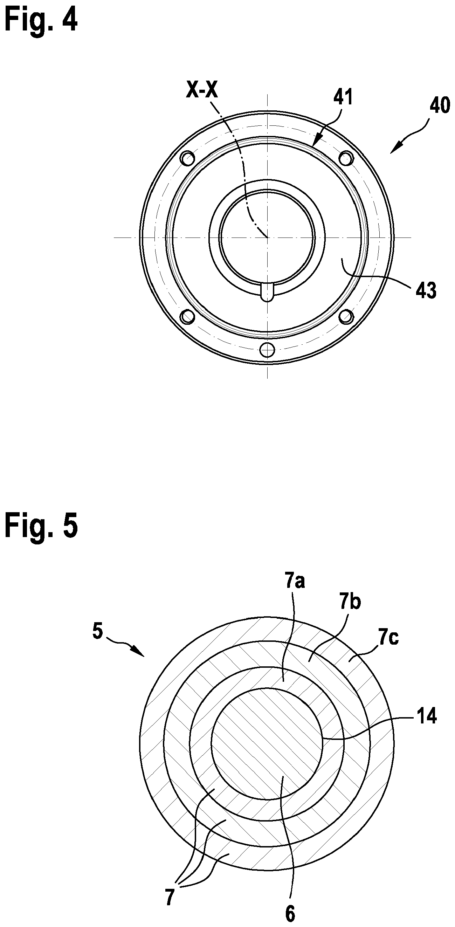

Die Verwendung von keramischem partikulärem Trägermaterial 6 hat noch einen weiteren Vorteil, der gut aus Figur 5 ersichtlich ist: so kann zwischen dem partikulären Trägermaterial 6 und dem graphenhaltigen Material 7 besonders leicht eine stoffschlüssige Verbindung 14 gebildet werden, durch die das graphenhaltige Material 7 fest mit der Oberfläche des partikulären Trägermaterials 6 verbunden wird. In diesem Falle handelt es sich insbesondere um eine Sinterverbindung, die sich durch eine hohe Stabilität auszeichnet, wodurch die Abriebfestigkeit erhöht wird.

Die vorstehenden Ausführungen können analog auch für den rotierenden Gleitring 2 gelten, wodurch sich die erfindungsgemäß erzielten Effekte potenzieren lassen.

Figur 3 zeigt eine Lageranordnung 40 im Längsschnitt. Die Lageranordnung 40 ist als Gleitlager ausgebildet und umfasst zwei Radialgleitlager 41 und ein Axialgleitlager 42, die eine Welle 43 lagern. Figur 4 zeigt dieselbe Lageranordnung 40 der Vollständigkeit halber im Querschnitt. Mindestens eines der gezeigten Gleitlager 41, 42 umfasst eine Gleitfläche, die aus einem gesinterten Material gebildet ist, das ein partikuläres Trägermaterial und ein graphenhaltiges Material umfasst, wie es beispielhaft für den stationären Gleitring in Figur 2 offenbart ist. Das partikuläre Trägermaterial ist mindestens teilweise von dem graphenhaltigen Material ummantelt, so dass das graphenhaltige Material eine Oberfläche des partikulären Trägermaterials mindestens abschnittsweise umgibt.

Wie in Figur 5 ferner zu erkennen ist, ummantelt das graphenhaltige Material 7, das insbesondere bis auf technisch unvermeidbare Rückstände, aus Graphen besteht, das partikuläre Trägermaterial 6 in Form einzelner Lagen 7a, 7b, 7c, die jeweils übereinander angeordnet sind. Vorteilhaft kann die graphenhaltige Ummantelung eine Lage bis 100 Lagen, insbesondere eine Lage bis 20 Lagen und insbesondere eine Lage bis zwölf Lagen an graphenhaltigem Material 7 umfassen. So kann ein Gehalt an Graphen im mit graphenhaltigem Material ummanteltem partikulärem Trägermaterial 5, und damit auch die Abriebfestigkeit gezielt gesteuert werden.

Die Verwendung von mit graphenhaltigem Material ummanteltem partikulärem Trägermaterial 5 ermöglicht die Herstellung eines Gleitelements, wie beispielsweise einer Gleitringdichtung oder einer Lageranordnung, mit einer sehr guten Härte, hohem Elastizitätsmodul und sehr guter Abriebfestigkeit bei gleichzeitig ausgezeichneten tribologischen Eigenschaften.

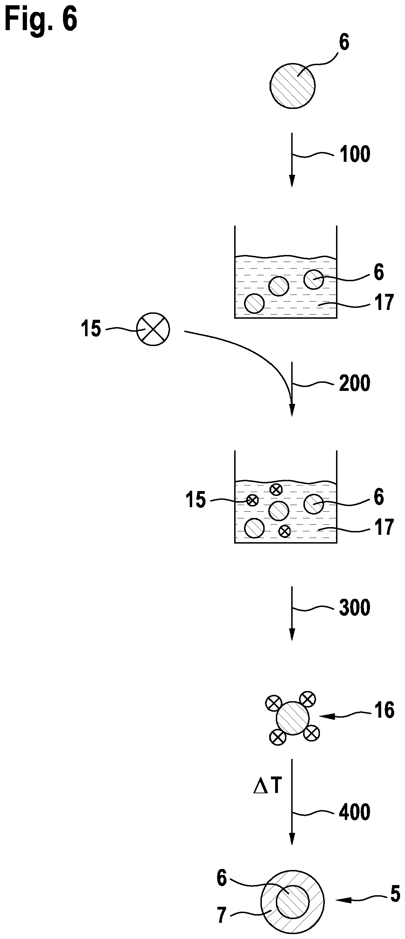

Figur 6 zeigt einen schematischen Verfahrensablauf eines Verfahrens zur Herstellung von mit graphenhaltigem Material ummanteltem partikulärem Trägermaterial 5, wie es beispielsweise in Figur 5 dargestellt ist. Zunächst erfolgt in Schritt 100 ein Dispergieren eines partikulären Trägermaterials 6 in einem Dispergiermittel 17. In der hier gezeigten Ausführungsform wird SiC als partikuläres Trägermaterial 6 verwendet. Als Dispergiermittel 17 kann eine wässrige Lösung, reines Wasser oder aber auch eine alkoholische Lösung vorteilhafterweise zur Anwendung kommen. Das Dispergieren wird derart ausgeführt, dass nach erfolgter Dispergierung das partikuläre Trägermaterial 6 in Form einzelner Partikel im Dispergiermittel 17 verteilt vorliegt. Hierbei kann die Anwendung eines Rührers und/oder eines Homogenisators und/oder von Ultraschall vorteilhaft sein.

In Schritt 200 erfolgt das Zugeben einer Kohlenstoffquelle 15, insbesondere einer kohlenstoffhaltigen Verbindung, die vorteilhaft ausgewählt ist aus der Gruppe bestehend aus: Furfurylalkohol, Glucose und Mischungen daraus, da diese Kohlenstoffquellen aus nachwachsenden Rohstoffen gebildet sind. Die Kohlenstoffquelle 15 fungiert als Precursor des herzustellenden graphenhaltigen Materials.

Im Anschluss daran wird in Schritt 300 das Dispergiermittel 17 unter Erhalt einer Festsubstanz 16 entfernt, was beispielsweise durch Verdampfen des Dispergiermittels 17 in einem Rotationsverdampfer, durch Gefriertrocknen und dergleichen sehr leicht ausgeführt werden kann. Es wird bis zur Gewichtskonstanz der Festsubstanz 16 getrocknet.

Die erhaltene Festsubstanz 16 umfasst nun das partikuläre Trägermaterial 6 sowie den Graphen-Precursor, der auf einer Oberfläche des partikulären Trägermaterials 6 angeordnet ist. Die Festsubstanz 16 kann nun unverändert weiterverarbeitet werden, wird aber vorteilhafterweise zerkleinert und sodann in Schritt 400 carbonisiert. Mit anderen Worten wird die Kohlenstoffquelle 15 derart thermisch behandelt, dass graphenhaltiges Material 7 das partikuläre Trägermaterial 6 mindestens teilweise, insbesondere vollständig, ummantelt. Das Carbonisieren findet insbesondere unter Inertgasatmosphäre, wie z.B. unter Stickstoff, statt. Andere Inertgase sind aber ebenfalls denkbar.

Beispielhaft wird das Carbonisieren im Schritt 400 in einem zweistufigen Temperaturprozess unter Inertgasatmosphäre ausgeführt, wobei in einem ersten Temperaturschritt die Festsubstanz 16 mit einer Heizrate von 5 °C/min auf 80 bis 180 °C aufgeheizt und für 15 bis 25 Stunden auf diesem Temperaturbereich gehalten wird und wobei in einem zweiten Temperaturschritt die Festsubstanz 16 mit einer Heizrate von 5 °C/min auf 600 bis 1500 °C aufgeheizt und für 4 bis 8 Stunden auf diesem Temperaturbereich gehalten wird.

Es wird ein mit graphenhaltigem Material ummanteltes partikuläres Trägermaterial 5 erhalten, wobei das graphenhaltige Material 7 in Form von einzelnen Lagen, also mindestens einer Lage und vorteilhafterweise bis zu 100 Lagen, insbesondere vorteilhaft bis zu 20 Lagen und insbesondere vorteilhaft bis zu 12 Lagen das partikuläre Trägermaterial 6 ummantelt.

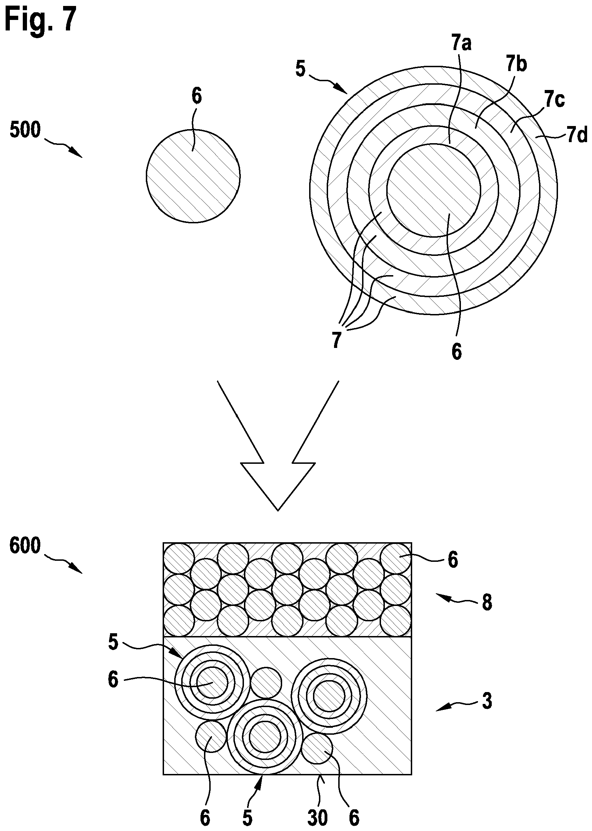

Figur 7 zeigt eine schematische Darstellung eines Verfahrens zur Herstellung eines Gleitelements gemäß einer Ausführungsform, das beispielhaft in Form eines Gleitrings 3 ausgebildet ist. Hierbei wird in Verfahrensschritt 500 zunächst eine Mischung aus einem partikulären Trägermaterial 6 und einem mindestens teilweise, insbesondere vollständig, mit einem graphenhaltigen Material ummantelten partikulären Trägermaterial 5 hergestellt. Das partikuläre Trägermaterial 6 ist insbesondere ein keramisches Material, das vorzugsweise aus der Gruppe bestehend aus: SiC, WC, B₄C, BN, Si₃N₄, Al₂O₃, MgO, ZrO₂ und beliebigen Gemischen daraus ausgewählt ist, und insbesondere SiC ist. Das Mischen kann insbesondere als Trockenmischen ausgeführt werden. Im Anschluss daran wird in Verfahrensschritt 600 die erhaltene Mischung gesintert. Durch das Sintern wird ein Gleitring 3 erhalten, der sich durch ein porenfreies Sintermaterial auszeichnet. Hierdurch ist die Dichte des Gleitrings 3 deutlich erhöht, wodurch auch ein Abriebvolumen erhöht ist. Der somit hergestellte Gleitring 3 zeichnet sich durch eine ausgezeichnete Stabilität, selbst bei starker mechanischer und/oder thermischer Belastung aus.

Wie in Figur 7 ferner gezeigt, kann die vorstehend durch Verfahrensschritt 500 erhaltene Mischung auf einen Basiskörper 8 aufgebracht werden, wobei der Basiskörper 8 ebenfalls insbesondere aus einem keramischen Material, insbesondere ausgewählt aus der Gruppe bestehend aus: SiC, WC, B₄C, BN, Si₃N₄, Al₂O₃, MgO, ZrO₂ und beliebigen Gemischen daraus, und insbesondere aus SiC, besteht. Hierdurch können bei gleichbleibend guter Qualität Materialkosten eingespart werden.

### Bezuqszeichenliste:

- 1: Gleitringdichtungsanordnung
- 2: rotierender Gleitring
- 3: stationärer Gleitring
- 4: Dichtspalt
- 5: mit graphenhaltigem Material ummanteltes partikuläres Trägermaterial
- 6: partikuläres Trägermaterial
- 7: graphenhaltiges Material
- 8: Basiskörper
- 9: Mitnehmerelement
- 10: rotierendes Bauteil
- 11: Gehäuse
- 12, 13: Dichtringe
- 14: stoffschlüssige Verbindung
- 15: Kohlenstoffquelle
- 16: Festsubstanz
- 17: Dispergiermittel
- 20: Produktbereich
- 21: Atmosphärenbereich
- 29: erste Gleitfläche
- 30: zweite Gleitfläche
- 31: Rückseite
- 40: Lageranordnung
- 41: Radialgleitlager
- 42: Axialgleitlager
- 43: Welle
- X-X: Axialrichtung
- 100-600: Verfahrensschritte

## Patentansprüche

1. Gleitelement umfassend eine erste Gleitfläche (29),
- wobei die erste Gleitfläche (29) ein partikuläres Trägermaterial (6) und ein graphenhaltiges Material (7) umfasst,
- wobei das partikuläre Trägermaterial (6) mindestens teilweise von dem graphenhaltigen Material (7) ummantelt ist und
- wobei zwischen dem partikulären Trägermaterial (6) und dem graphenhaltigen Material (7) eine stoffschlüssige Verbindung (14) vorhanden ist, und
- ferner umfassend einen ersten Basiskörper, wobei der erste Basiskörper ausschließlich das partikuläre Trägermaterial (6) aufweist.

2. Gleitelement nach Anspruch 1, wobei das partikuläre Trägermaterial (6) vollständig von dem graphenhaltigen Material (7) ummantelt ist.

3. Gleitelement nach einem der vorhergehenden Ansprüche, wobei die erste Gleitfläche aus einem Gemisch an partikulärem Trägermaterial (6) und mit graphenhaltigem Material ummanteltem partikulärem Trägermaterial (5) besteht.

4. Gleitelement nach Anspruch 3, wobei ein Masseverhältnis an partikulärem Trägermaterial (6) und mit graphenhaltigem Material ummanteltem partikulärem Trägermaterial (5) 80:20 bis 99,5:0,5, insbesondere 90:10 bis 99,5:0,5, beträgt.

5. Gleitelement nach einem der vorhergehenden Ansprüche, wobei das partikuläre Trägermaterial (6) aus einem keramischen Material, insbesondere ausgewählt aus der Gruppe bestehend aus: SiC, WC, B₄C, BN, Si₃N₄, Al₂O₃, MgO, ZrO₂ und Gemischen daraus, und insbesondere aus SiC, besteht.

6. Gleitelement nach einem der vorhergehenden Ansprüche, wobei die graphenhaltige Ummantelung eine Lage bis 100 Lagen (7a, 7b, 7c, 7d), insbesondere eine Lage bis 20 Lagen (7a, 7b, 7c, 7d) und insbesondere eine Lage bis zwölf Lagen (7a, 7b, 7c, 7d) an graphenhaltigem Material (7) umfasst.

7. Gleitelement nach einem der vorhergehenden Ansprüche, wobei die erste Gleitfläche (29) 6 bis 8 Vol% Makroporen, bezogen auf das Gesamtvolumen der ersten Gleitfläche (29), aufweist.

8. Gleitringdichtung umfassend:
- einen rotierenden ersten Gleitring (2) mit einer ersten Gleitfläche (29) und einen stationären zweiten Gleitring (3) mit einer zweiten Gleitfläche (30), welche zwischen sich einen Dichtspalt (4) definieren,
- wobei der erste Gleitring (2) und/oder der zweite Gleitring (3) ein Gleitelement nach einem der vorhergehenden Ansprüche ist.

9. Lageranordnung, insbesondere Gleitlager oder Wälzlager, insbesondere Radialgleitlager (41) oder Axialgleitlager (42), umfassend wenigstens ein Gleitelement nach einem der Ansprüche 1 bis 7.

## Claims

1. A sliding member comprising a first sliding surface (29),
- the first sliding surface (29) comprising a particulate support material (6) and a graphene-containing material (7),
- the particulate support material (6) being at least partially coated with the graphene-containing material (7), and
- a material bond (14) being present between the particulate support material (6) and the graphene-containing material (7), and
- further comprising a first base body, said first base body exclusively comprising said particulate support material (6).

2. The sliding member according to claim 1, wherein the particulate support material (6) is completely coated with the graphene-containing material (7).

3. The sliding member according to one of the preceding claims, wherein the first sliding surface consists of a mixture of particulate support material (6) and particulate support material (5) coated with graphene-containing material.

4. The sliding member according to claim 3, wherein a mass ratio of particulate support material (6) and particulate support material (5) coated with graphene-containing material is 80:20 to 99.5:0.5, especially 90:10 to 99.5:0.5.

5. The sliding member according to one of the preceding claims, wherein the particulate support material (6) consists of a ceramic material, especially selected from the group consisting of: SiC, WC, B₄C, BN, Si₃N₄, Al₂O₃, MgO, ZrO₂ and mixtures thereof, and especially SiC.

6. The sliding member according to one of the preceding claims, the graphene-containing sheathing comprising a coating up to 100 layers (7a, 7b, 7c, 7d), especially a coating up to 20 layers (7a, 7b, 7c, 7d) and especially a coating up to twelve layers (7a, 7b, 7c, 7d) of graphene-containing material (7).

7. The sliding member according to one of the preceding claims, the first sliding surface (29) having 6 to 8% by volume of macropores in relation to the total volume of the first sliding surface (29).

8. A mechanical seal comprising:
- a rotating first slide ring (2) having a first sliding surface (29) and a stationary second slide ring (3) having a second sliding surface (30) defining a sealing gap (4) therebetween,
- the first slide ring (2) and/or the second slide ring (3) being a sliding member according to one of the preceding claims.

9. A bearing arrangement, especially a slide bearing or roller bearing, especially a radial slide bearing (41) or axial slide bearing (42), comprising at least one sliding member according to one of claims 1 to 8.

## Revendications

1. Elément de glissement comprenant une première surface de glissement (29),
- dans lequel la première surface de glissement (29) comprend un matériau de support particulaire (6) et un matériau contenant du graphène (7),
- dans lequel le matériau de support particulaire (6) est enrobé au moins en partie du matériau contenant du graphène (7) et
- dans lequel une liaison de matière (14) est présente entre le matériau de support particulaire (6) et le matériau contenant du graphène (7), et
- comprenant en outre un premier corps de base, dans lequel le premier corps de base présente exclusivement le matériau de support particulaire (6).

2. Elément de glissement selon la revendication 1, dans lequel le matériau de support particulaire (6) est entièrement enrobé par le matériau contenant du graphène (7).

3. Elément de glissement selon l'une quelconque des revendications précédentes, dans lequel la première surface de glissement est constituée d'un mélange de matériau de support particulaire (6) et de matériau de support particulaire (5) enrobé de matériau contenant du graphène.

4. Elément de glissement selon la revendication 3, dans lequel un rapport massique du matériau de support particulaire (6) et du matériau de support particulaire (5) enrobé de matériau contenant du graphène atteint 80:20 à 99,5:0,5, en particulier 90:10 à 99,5:0,5.

5. Elément de glissement selon l'une quelconque des revendications précédentes, dans lequel le matériau de support particulaire (6) est constitué d'un matériau céramique, en particulier choisi dans le groupe constitué de : SiC, WC, B₄C, BN, Si₃N₄, Al₂O₃, MgO, ZrO₂ et de mélanges de ceux-ci, et en particulier de SiC.

6. Elément de glissement selon l'une quelconque des revendications précédentes, dans lequel l'enrobage contenant du graphène comprend une couche jusqu'à 100 couches (7a, 7b, 7c, 7d), en particulier une couche jusqu'à 20 couches (7a, 7b, 7c, 7d) et en particulier une couche jusqu'à douze couches (7a, 7b, 7c, 7d) de matériau contenant du graphène (7).

7. Elément de glissement selon l'une quelconque des revendications précédentes, dans lequel la première surface de glissement (29) présente 6 à 8 % vol de macropores, rapporté au volume total de la première surface de glissement (29).

8. Joint d'étanchéité à bagues de glissement comprenant :
- une première bague de glissement (2) rotative avec une première surface de glissement (29) et une deuxième bague de glissement (3) fixe avec une deuxième surface de glissement (30), lesquelles définissent entre elles une fente d'étanchéité (4),
- dans lequel la première bague de glissement (2) et/ou la deuxième bague de glissement (3) est un élément de glissement selon l'une quelconque des revendications précédentes.

9. Ensemble palier, en particulier palier lisse ou palier à roulement, en particulier palier lisse radial (41) ou palier lisse axial (42), comprenant au moins un élément de glissement selon l'une quelconque des revendications 1 à 7.
